# EUROPÄISCHE PATENTANMELDUNG

(11) **EP 3 536 725 A1**
(43) Veröffentlichungstag der Anmeldung: **11.09.2019**
(21) Anmeldenummer: 18160234.3
(22) Anmeldetag: 06.03.2018
(51) Int. Cl.: C08G 18/48, C08G 18/72, C08G 18/73, C08G 18/75, C08G 18/80, C08G 59/32, C08G 59/38, C08G 59/50, C08G 18/10, C09D 163/00, C08G 18/28, C08G 18/32

(54) **BIOZIDES BESCHICHTUNGSMATERIAL UND DAZUGEHÖRIGES HERSTELLUNGSVERFAHREN**

(71) Anmelder: El Kudsi, Karim, 90587 Obermichelbach (DE)
(72) Erfinder: El Kudsi, Karim, 90587 Obermichelbach (DE)
(74) Vertreter: Gulde & Partner

(57) **Zusammenfassung**

Die Erfindung betrifft ein biozides Beschichtungsmaterial und ein dazugehöriges Herstellungsverfahren. Das Verfahren umfasst die Schritte:
(i) Bereitstellen einer Harnstoffamin-Komponente, erhältlich durch Umsetzung
a) eines aliphatischen Di- oder Triisocyanats
mit
b) einem Gemisch aus einem ersten Amin mit einer primären oder sekundären Amingruppe und einem oder mehreren zweiten Amin(en) mit 2 oder mehr primären oder sekundären Amingruppen,
wobei ein Verhältnis der Summe der primären und sekundären Amingruppen zu den Isocyanatgruppen 10 : 1 bis 2 : 1 beträgt;
(ii) Bereitstellen einer Epoxid-Komponente, die einen oder mehrere aliphatische(n) polyfunktionelle(n) Glycidether umfasst; und
(iii) Umsetzen der Harnstoffamin-Komponente mit der Epoxid-Komponente,
wobei ein Verhältnis der Epoxidgruppen der Epoxid-Komponente zu den Amingruppen der Harnstoffamin-Komponente 0,25 : 1 bis 1 : 0,25 beträgt.

## Beschreibung

Die Erfindung betrifft ein biozides Beschichtungsmaterial und ein dazugehöriges Herstellungsverfahren.

### Technologischer Hintergrund

Beschichtungen auf der Basis von Epoxiden sind weit verbreitet. Diese basieren im wesentlichen auf Bisphenol-A-diglycidether-, Bisphenol-F-diglycidether-, Bisphenol-S-diglycidether-, Novolak-Epoxid-Systemen sowie verschiedenen Aminen als Härtern, z. B. Diethylentriamin, Dipropylentriamin, Isophorondiamin, 2,2,4-/2,4,4-Trimethylhexandiamin usw. Eine biozide Wirkung, d. h. die Verhinderung der Ausbildung von Biofilmen auf der Oberfläche der Beschichtung und das nachfolgende Aufwachsen von Bakterien, Algen, Mikropilzen oder marinen Organismen, wird in der Regel durch Additive erreicht. Solche Additive können Metalle, wie Kupfer, Zinn oder Silber in verschiedener Form, organische Chlor- und Schwefelverbindungen, wie Carbendazim oder 2-Methylthio-4-*tert*-butylamino-6-cyclopropylamino-s-triazin, Propioconazol, 3-(3,4-Dichiorphenyl)-1,1-dimethylharnstoff (Diuron), 2-Octylisothiazol-3(2H)on (Octhilinon), oder Metallverbindungen, wie Bis-(tributylzinn)oxid, Triphenylzinnhydroxid, und Triphenylzinnchlorid umfassen. Das Wirkprinzip aller dieser Verbindungen beruht darauf, dass geringe Mengen kontinuierlich in die Umwelt abgegeben werden, dort aber auf Grund ihrer Eigenschaften nicht abgebaut werden können und sich akkumulieren.

Alternative Lösungen bestehen in der Beschichtung mit Wachs, Silikonen oder anderen hydrophoben Materialien, die ein Andocken von Mikroorganismen verhindern sollen. Der Einsatz polyfluorierter Verbindungen, die als mögliche Alternative gehandelt wurden, ist zumindest in Deutschland gesetzlich verboten worden. Weitere hydrophobe Verbindungen sind als potentiell umweltschädigend unter Beobachtung gestellt.

Die genannten Ansätze betreffen in erster Linie Beschichtungen im maritimen Bereich und für Fußböden sowie solche mit Kontakt für Lebensmittel oder Kinder. Bisphenol-A, S, F dürfen im Bereich der Lebensmittel und des Wassers nicht mehr eingesetzt werden. Das betrifft auch Rohrinnenbeschichtungen für Brauch- und Trinkwasser.

Weiterhin wurde vorgeschlagen, Beschichtungen aus Zement-basierten Systemen oder keramikähnlichen Materialien herzustellen, siehe z. B. WO 2007/115649 A1 oder WO 2011/000339 A1. In neueren technischen Lösungen werden vor allem Nanopartikel unterschiedlicher Struktur, nanoskalige oder Mikrohohlkugeln mit Bioziden als Inhalt oder nanoskalige Metalle wie Zink oder Kupfer beschrieben, siehe z. B. US 7,201,790 B1.

In einer weiteren technischen Lösung, WO 2014/008264 A1, werden antimikrobielle Zusammensetzungen auf der Basis von Polyhaloolefin-Polymeren und kationischen antimikrobiellen Reagenzien sowie einem Träger mit Weichmacher und Wärmestabilisator beschrieben, wobei die antimikrobielle Verbindung in die Polymerstruktur eingebunden wird.

Nach der technischen Lehre der DE 10 2009 042 118 A1 werden algenresistente Fäden mit Algiziden, die fest in die Polymermatrix eingebaut sind und so dauerhaft den Algenbefall verhindern sollen, beschrieben. Dazu werden z. B. Alkylbenzyldimethylammoniumchloride oder N,N-Dialkylharnstoffderivate allein oder in Kombination dem Kunststoffgranulat vor der Extrusion zugesetzt. Bei dieser technischen Lösung handelt es sich damit um ein gemeinsames Verschmelzen von Polymer und Algizid und nicht um eine chemische Reaktion zum Aufbau des Polymeren.

Weiterhin ist bekannt, dass bestimmte nanoskalige, modifizierte Tone biozide Eigenschaften aufweisen, siehe z. B. G. J. Houben, Applied Geochemistry 18, Issue 6, 941-954 (2003). Bei Oxoniumionen auf der Oberfläche der Teilchen soll dieser Effekt besonders ausgeprägt sein.

Die Herstellung von Antifouling-Beschichtungen unter Verwendung von Oligoharnstoff-Verbindungen mit endständigen Aminogruppen ist in WO 2012/095 105 A1 beschrieben, wobei die Oligoharnstoff-Verbindungen in Glykolen und/oder Polyetheralkoholen dispergiert sind. Polyurethanharnstoff-Beschichtungen auf dieser Basis weisen eine inhärent biozide Wirkung auf. Diese Oligoharnstoff-Verbindungen sind auf Grund des Gehaltes an Diolen/Polyolen als Härterkomponenten für Epoxidharze weniger oder nicht geeignet, insbesondere bei Beschichtungen, bei denen das Auslaugen von Inhaltsstoffen der Beschichtung bei Kontakt mit Wasser zu vermeiden ist.

Es besteht folglich ein Bedarf an Beschichtungsmaterialien mit einstellbarer Härtungsgeschwindigkeit sowie Sperrfähigkeit gegen Wasser bzw. Gase, die insbesondere keine die Umwelt belastenden Additive enthalten und möglichst langfristig ihre biozide Wirkung behalten.

### Zusammenfassung der Erfindung

Ein oder mehrere der geschilderten Nachteile des Standes der Technik können mit Hilfe des erfindungsgemäßen Verfahrens zur Herstellung eines bioziden Beschichtungsmaterials gelöst oder zumindest gemindert werden. Dazu umfasst das Verfahren die Schritte:
(i) Bereitstellen einer Harnstoffamin-Komponente, erhältlich durch Umsetzung
   a) eines aliphatischen Di- oder Triisocyanats
      mit
   b) einem Gemisch aus einem ersten Amin mit einer primären oder sekundären Amingruppe und einem oder mehreren zweiten Amin(en) mit 2 oder mehr primären oder sekundären Amingruppen,
   wobei ein Verhältnis der Summe der primären und sekundären Amingruppen zu den Isocyanatgruppen 10 : 1 bis 2 : 1 beträgt;
(ii) Bereitstellen einer Epoxid-Komponente, die einen oder mehrere aliphatische(n) polyfunktionelle(n) Glycidether umfasst; und
(iii) Umsetzen der Harnstoffamin-Komponente mit der Epoxid-Komponente,
   wobei ein Verhältnis der Epoxidgruppen der Epoxid-Komponente zu den Amingruppen der Harnstoffamin-Komponente 0,25 : 1 bis 1 : 0,25, vorzugsweise 0,5 : 1 bis 1 : 0,5 beträgt.

Überraschend wurde nun gefunden, dass die über das erfindungsgemäße Verfahren erhältlichen Oligoharnstoffamine basierend auf Gemischen von Monoaminen und Di- und/oder Polyaminen, die partiell mit einem oder mehreren Diisocyanaten umgesetzt wurden, bei ihrer weiteren Umsetzung mit Epoxidverbindungen Schichten oder Filme bilden können, die eine inhärent biozide Wirkung aufweisen. Diese Schichten oder Filme weisen darüber hinaus eine hohe Sperrfähigkeit gegen Wasser, Sauerstoff und/oder Kohlendioxid auf.

Im Schritt (i) des Verfahrens wird zunächst durch eine Additionsreaktion von Isocyanaten und verschiedenen Aminen ein Oligoharnstoff-Komposit gebildet. Letzteres wird anschließend im Schritt (iii) mit polyfunktionellen Glycidethern zu einem neuartigen, vernetzten Beschichtungsmaterial umgesetzt.

Zur Herstellung der Harnstoffamin-Komponente werden im Schritt (i) zwei verschieden Arten von Aminen eingesetzt, die sich durch die Anzahl der vorhandenen primären oder sekundären Amingruppen unterscheiden. Ein erstes Amin weist dabei nur eine einzige primäre oder sekundäre Amingruppe auf, während das zweite Amin 2 oder mehr dieser Funktionalitäten besitzt und ggf. eine tertiäre Aminogruppe beinhalten kann. Durch die anschließende Umsetzung mit polyfunktionalen Isocyanaten entsteht ein komplexes Gemisch aus Oligoharnstoffen, die noch freie Amingruppen aufweisen und einem oder mehreren Aminen.

Bevorzugt ist das erste Amin ein C3-C15 Cycloamin oder eine Verbindung der Formel (1)

R¹-NHR² (1)

mit
R¹ ausgewählt aus der Gruppe umfassend C1- C15 Alkyl, C3-C10 Cycloalkyl und C₃-C₁₀ Heterocycloalkyl und
R² ausgewählt aus der Gruppe umfassend Wasserstoff, C1- C15 Alkyl, C3-C10 Cycloalkyl und C₃-C₁₀ Heterocycloalkyl.

Bevorzugt ist das zweite Amin ein C3-C15 Cycloamin oder eine Verbindung der Formel (2)

R¹(-NHR²)^{a}(-NHR³)^{b} (2)

mit
R¹ ausgewählt aus der Gruppe umfassend C1- C15 Alkyl, C3-C10 Cycloalkyl und C₃-C₁₀ Heterocycloalkyl und

R² und R³ unabhängig voneinander ausgewählt aus der Gruppe umfassend Wasserstoff, C1-C15 Alkyl, C3-C10 Cycloalkyl und C₃-C₁₀ Heterocycloalkyl. Die beiden Amingruppen (-NH₂)^{a} und (-NH₂)^{b} sind direkt oder über Alkylen- insbesondere Methylenbrücken an den Rest R¹ gebunden. Die Alkylgruppen der Diamine können darüber hinaus auch durch eine ggf. substituierte Aminogruppe verbunden sein, wie beispielsweise in Bis-N,N-(3-aminopropyl)-N-methylamin.

Unter einem aliphatischen Di- oder Triisocyanat wird eine acyclische oder cyclische, gesättigte oder ungesättigte Kohlenstoffverbindung verstanden, die zwei oder drei Isocyanatgruppen aufweist. Bevorzugt sind Diisocyanate der Formel (3)

R¹-NCO)^{a}(-NCO)^{b} (3)

mit
R¹ ausgewählt aus der Gruppe umfassend C1- C15 Alkyl, C3-C10 Cycloalkyl und C₃-C₁₀ Heterocycloalkyl. Die beiden Isocyanatgruppen (-NCO)^{a} und (-NCO)^{b} sind direkt an den Rest R¹ gebunden.

Alternativ können die Isocyanatkomponenten Vorpolymerisate (Prepolymere oder Quasiprepolymere) aus Di- und/oder Triolen und Diisocyanaten, aus Diaminen und Diisocyanaten oder durch symmetrische oder asymmetrische Trimerisierung von aliphatischen und/oder cycloaliphatischen Diisocyanaten erhaltene Triiisocyanate sein. Dabei werden vorzugsweise kurzkettige Diole wie Butan-1,4-diol, Dipropylenglykol, Tripropylenglykol, Diethylenglykol, Polytetrahydrofurane der Molmasse 200 bis 2000, Ethylenoxid-Propylenoxid-Copolymere der Molmasse 1000 bis 4000 oder Polycarbonatdiole der Molmasse 500 bis 2000 eingesetzt. Das Verhältnis der Isocyanatgruppen zu den Hydroxylgruppen liegt dabei vorzugsweise zwischen 2,1 : 1 und 5 : 1, insbesondere zwischen 2,1 : 1 und 2,8 : 1.

In einer besonderen Ausführungsform werden Vorpolymerisate aus einem Diol und einem Diisocyanat im Verhältnis 2,1 : 1 bis 3,5 : 1 gebildet und unmittelbar nach ihrer Herstellung in ein Gemisch von Mono- und Diaminen gegeben und darin wieder unter Harnstoffbildung und Freisetzung des Diols gespalten. Geeignete Diole für diese Variante des erfindungsgemäßen Verfahrens sind z. B. Ethylenglykol, Diethylenglykol, Propan-1,3-diol, Butan-1,4-diol, Dipropylenglykol, Hexan-1,6-diol, und 2-Ethyl-1,3-hexandiol.

Unter C1- C15 Alkyl wird ein linearer oder verzweigter Alkylrest verstanden, der die allgemeinen Formel CₙH₂ₙ₊₁ aufweist, wobei n = 1 bis 15 bedeutet. C1- C5 Alkyl umfasst beispielsweise Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl und 1-Ethylpropyl. Beispiele für Alkylreste mit n ≥ 6 umfassen n-Hexan, n-Heptan, n-Octan, n-Nonan, n-Decan, 1-Methylpentyl, 1-Methylhexyl, 1-Methylheptyl, 1-Methyloctyl, 1-Methylnonyl, 1-Methyldecanyl, 1-Ethylbutyl, 1-Ethylpentyl, 1-Ethylhexyl, 1-Ethylheptyl, 1-Ethyloctyl, 1-Ethylnonyl, 1-Ethyldecanyl, 2-Methylpentyl, 2-Methylhexyl, 2-Methylheptyl, 2-Methyloctyl, 2-Methylnonyl, 2-Methyldecanyl, 2-Ethylpropyl, 2-Ethylbutyl, 2-Ethylpentyl, 2-Ethylhexyl, 2-Ethylheptyl, 2-Ethyloctyl, 2-Ethylnonyl, 2-Ethyldecanyl, 1,1-Dimethylbutyl, 1,1-Dimethylpentyl, 1,1-Dimethylhexyl, 1,1-Dimethylheptyl, 1,1-Dimethyloctyl, 1,1-Dimethylnonyl, 1,1-Dimethyldecanyl, 1,2-Dimethylbutyl, 1,2-Dimethylpentyl, 1,2-Dimethylhexyl, 1,2-Dimethylheptyl, 1,2-Dimethyloctyl, 1,2-Dimethylnonyl, 1,2-Dimethyldecanyl, 2-Ethyl-1-methylbutyl, 2-Ethyl-1-methylpentyl, 2-Ethyl-1-methylhexyl, 2-Ethyl-1-methylheptyl, 2-Ethyl-1-methyloctyl, 2-Ethyl-1-methylnonyl, 2-Ethyl-1-methyldecanyl, 1-Ethyl-2-methylpropyl, 1-Ethyl-2-methylbutyl, 1-Ethyl-2-methylpentyl, 1-Ethyl-2-methylhexyl, 1-Ethyl-2-methylheptyl, 1-Ethyl-2-methyloctyl, 1-Ethyl-2-methylnonyl und 1-Ethyl-2-methyldecanyl.

Unter C3-C10 Cycloalkyl wird ein monocyclischer oder bicyclischer Cycloalkylrest mit 3 bis 15 Kohlenstoffatomen verstanden. Beispiele umfassen Cycloalkyl Cyclopropyl, Cyclobutyl, Cyclopentyl, Cyclohexyl und Cycloheptyl. Die Cycloalkylreste können ihrerseits einfach oder mehrfach mit C1-C5 Alkylresten der oben wiedergegebenen Bedeutung substituiert sein. Beispiele für derartig substituierte Cycloalkyreste umfassen 1-Methyl-1-Cyclopropyl, 1-Methyl-1-Cyclobutyl, 1-Methyl-1-Cyclopentyl, 1-Methyl-1-Cyclohexyl, 1-Methyl-1-Cycloheptyl, 2-Methyl-1-Cyclopropyl, 2-Methyl-1-Cyclobutyl, 2-Methyl-1-Cyclopentyl, 2-Methyl-1-Cyclohexyl, 2-Methyl-1-Cycloheptyl, 3-Methyl-1-Cyclobutyl, 3-Methyl-1-Cyclopentyl, 3-Methyl-1-Cyclohexyl, 3-Methyl-1-Cycloheptyl, 4-Methyl-1-Cyclohexyl, 4-Methyl-1-Cycloheptyl, 1,2-Dimethyl-1-Cyclopropyl, 2,2-Dimethyl-1-Cyclopropyl, 2,3-Dimethyl-1-Cyclopropyl, 1,2-Dimethyl-1-Cyclobutyl, 1,3-Dimethyl-1-Cyclobutyl, 2,2-Dimethyl-1-Cyclobutyl, 2,3-Dimethyl-1-Cyclobutyl, 2,4-Dimethyl-1-Cyclobutyl, 3,3-Dimethyl-1-Cyclobutyl, 1,2-Dimethyl-1-Cyclopentyl, 1,3-Dimethyl-1-Cyclopentyl, 2,2-Dimethyl-1-Cyclopentyl, 2,3-Dimethyl-1-Cyclopentyl, 2,4-Dimethyl-1-Cyclopentyl, 2,5-Dimethyl-1-Cyclopentyl, 3,3-Dimethyl-1-Cyclopentyl, 3,4-Dimethyl-1-Cyclopentyl, 1,2-Dimethyl-1-Cyclohexyl, 1,3-Dimethyl-1-Cyclohexyl, 1,4-Dimethyl-1-Cyclohexyl, 1,5-Dimethyl-1-Cyclohexyl, 1,6-Dimethyl-1-Cyclohexyl, 2,2-Dimethyl-1-Cyclohexyl, 2,3-Dimethyl-1-Cyclohexyl, 2,4-Dimethyl-1-Cyclohexyl, 2,5-Dimethyl-1-Cyclohexyl, 2,6-Dimethyl-1-Cyclohexyl, 3,3-Dimethyl-1-Cyclohexyl, 3,4-Dimethyl-1-Cyclohexyl, 3,5-Dimethyl-1-Cyclohexyl, 3,6-Dimethyl-1-Cyclohexyl, 4,4-Dimethyl-1-Cyclohexyl, 1,2,2-Trimethyl-1-Cyclopropyl, 1,2,3-Trimethyl-1-Cyclopropyl, 1,2,2-Trimethyl-1-Cyclobutyl, 1,3,3-Trimethyl-1-Cyclobutyl, 1,2,3-Trimethyl-1-Cyclobutyl, 2,2,3-Trimethyl-1-Cyclobutyl, 2,2,4-Trimethyl-1-Cyclobutyl, 1,2,2-Trimethyl-1-Cyclopentyl, 1,2,3-Trimethyl-1-Cyclopentyl, 1,2,4-Trimethyl-1-Cyclopentyl, 1,2,5-Trimethyl-1-Cyclopentyl, 1,3,3-Trimethyl-1-Cyclopentyl, 1,3,4-Trimethyl-1-Cyclopentyl, 1,3,5-Trimethyl-1-Cyclopentyl, 2,2,3-Trimethyl-1-Cyclopentyl, 2,2,4-Trimethyl-1-Cyclopentyl, 2,2,5-Trimethyl-1-Cyclopentyl, 2,3,3-Trimethyl-1-Cyclopentyl, 2,3,4-Trimethyl-1-Cyclopentyl, 2,3,5-Trimethyl-1-Cyclopentyl, 2,3,3-Trimethyl-1-Cyclopentyl, 2,4,4-Trimethyl-1-Cyclopentyl, 2,4,5-Trimethyl-1-Cyclopentyl, 2,5,5-Trimethyl-1-Cyclopentyl, 3,3,4-Trimethyl-1-Cyclopentyl, 3,3,5-Trimethyl-1-Cyclopentyl, 3,4,5-Trimethyl-1-Cyclopentyl, 3,4,4-Trimethyl-1-Cyclopentyl, 1,2,2-Trimethyl-1-Cyclohexyl, 1,2,3-Trimethyl-1-Cyclohexyl, 1,2,4-Trimethyl-1-Cyclohexyl, 1,2,5-Trimethyl-1-Cyclohexyl, 1,2,6-Trimethyl-1-Cyclohexyl, 1,3,3-Trimethyl-1-Cyclohexyl, 1,3,4-Trimethyl-1-Cyclohexyl, 1,3,5-Trimethyl-1-Cyclohexyl, 1,3,6-Trimethyl-1-Cyclohexyl, 1,4,4-Trimethyl-1-Cyclohexyl, 2,2,3-Trimethyl-1-Cyclohexyl, 2,2,4-Trimethyl-1-Cyclohexyl, 2,2,5-Trimethyl-1-Cyclohexyl, 2,2,6-Trimethyl-1-Cyclohexyl, 2,3,3-Trimethyl-1-Cyclohexyl, 2,3,4-Trimethyl-1-Cyclohexyl, 2,3,5-Trimethyl-1-Cyclohexyl, 2,3,6-Trimethyl-1-Cyclohexyl, 2,4,4-Trimethyl-1-Cyclohexyl, 2,4,5-Trimethyl-1-Cyclohexyl, 2,4,6-Trimethyl-1-Cyclohexyl, 2,5,5-Trimethyl-1-Cyclohexyl, 2,5,6-Trimethyl-1-Cyclohexyl, 2,6,6-Trimethyl-1-Cyclohexyl, 3,3,4-Trimethyl-1-Cyclohexyl, 3,3,5-Trimethyl-1-Cyclohexyl, 3,3,6-Trimethyl-1-Cyclohexyl, 3,4,4-Trimethyl-1-Cyclohexyl, 3,4,5-Trimethyl-1-Cyclohexyl, 3,4,6-Trimethyl-1-Cyclohexyl, 3,5,6-Trimethyl-1-Cyclohexyl, 1,2,3,3-Tetramethyl-1-Cyclopropyl, 2,2,3,3-Tetramethyl-1-Cyclopropyl, 1,2,2,3-Tetramethyl-1-Cyclopropyl, 1,2,2,3-Tetramethyl-1-Cyclobutyl, 1,2,3,3-Tetramethyl-1-Cyclobutyl, 2,2,3,3-Tetramethyl-1-Cyclobutyl, 2,3,3,4-Tetramethyl-1-Cyclobutyl, 1,2,2,3-Tetramethyl-1-Cyclopentyl, 1,2,2,4-Tetramethyl-1-Cyclopentyl, 1,2,2,5-Tetramethyl-1-Cyclopentyl, 1,2,3,3-Tetramethyl-1-Cyclopentyl, 1,2,3,4-Tetramethyl-1-Cyclopentyl, 1,2,3,5-Tetramethyl-1-Cyclopentyl, 1,2,5,5-Tetramethyl-1-Cyclopentyl, 2,2,3,3-Tetramethyl-1-Cyclopentyl, 2,2,3,3-Tetramethyl-1-Cyclohexyl, 2,2,4,4-Tetramethyl-1-Cyclohexyl, 2,2,5,5-Tetramethyl-1-Cyclohexyl, 3,3,4,4-Tetramethyl-1-Cyclohexyl, 3,3,5,5-Tetramethyl-1-Cyclohexyl, 1-Ethyl-1-Cyclopropyl, 1-Ethyl-1-Cyclobutyl, 1-Ethyl-1-Cyclopentyl, 1-Ethyl-1-Cyclohexyl), 1-Ethyl-1-Cycloheptyl, 2-Ethyl-1-Cyclopropyl, 2-Ethyl-1-Cyclobutyl, 2-Ethyl-1-Cyclopentyl, 2-Ethyl-1-Cyclohexyl, 2-Ethyl-1-Cycloheptyl, 3-Ethyl-1-Cyclobutyl, 3-Ethyl-1-Cyclopentyl, 3-Ethyl-1-Cyclohexyl, 3-Ethyl-1-Cycloheptyl, 4-Ethyl-1-Cyclohexyl und 4-Ethyl-1-Cycloheptyl.

Unter C₃-C₁₀ Heterocycloalkyl wird ein monocyclischer oder bicyclischer Cycloalkylrest mit 3 bis 15 Kohlenstoffatomen verstanden, in dem wenigstens ein Kohlenstoffatom des Rings durch ein Heteroatom ausgewählt aus der Gruppe N, O, P und S ersetzt ist. Die Cycloalkylreste können ihrerseits einfach oder mehrfach mit C1-C5 Alkylresten der oben wiedergegebenen Bedeutung substituiert sein.

Unter C₃-C₁₀ Cycloamin wird eine monocyclische oder bicyclische Cycloalkylverbindung aus 3 bis 15 Kohlenstoffatomen verstanden, in der wenigstens ein Kohlenstoffatom des Rings durch eine NH-Gruppe ersetzt ist. Weitere Kohlenstoffatome des Rings können durch ein Heteroatom ausgewählt aus der Gruppe N, O, P und S ersetzt werden. Beispiele umfassen Aziridin, Azetidin, Pyrrolidin, und Piperidin. Die Cycloamine können einfach oder mehrfach mit C1-C5 Alkylresten der oben wiedergegebenen Bedeutung substituiert sein.

Wenn vorliegend die Bezeichnung ,erstes Amin' verwendet wird, so sind hiermit sowohl Einzelverbindungen als auch Gemische derselben gemeint. Mit anderen Worten, das erste Amin kann zwei oder mehr Einzelverbindungen (Amine mit einer primären oder sekundären Amingruppe) umfassen. Dasselbe gilt analog für die Bezeichnung ,zweites Amin'.

Vorzugsweise weist das erste Amin eine sekundäre Amingruppe auf. Besonders bevorzugt ist das erste Amin eine Verbindung oder ein Gemisch von Verbindungen, welche ausgewählt sind aus der Gruppe umfassend Di-n-butylamin, Butylamin, Piperidin, Cyclohexylamin, N-Ethyl-N-cyclohexylamin, 2-Aminoethanol, Dimethylamin, N-Methyl-N-cyclohexylamin, N-Propyl-N-cyclohexylamin, N-Butyl-N-cyclohexylamin, N,N-Dicyclohexylamin und Aziridin.

Ferner ist bevorzugt, wenn das zweite Amin zwei Amingruppen aufweist. Das zweite Amin ist vorzugsweise eine Verbindung oder ein Gemisch von Verbindungen, welche ausgewählt sind aus der Gruppe umfassend 1-Amino-3-aminomethyl-3,5,5-trimethylcyclohexan (Isophorondiamin), 1,3-Benzendimethanamin, Bis-(4-aminocyclohexyl)methan, 1,4-Diaminobutan, 1,6-Diaminohexan, 2-Methyl-1,5-diaminopentan, 1,6-Diamino-2,2,4-trimethylhexan, 1,6-Diamino-2,4,4-trimethylhexan, Cyclohexan-1,4-diamin, 2-Ethyl-imidazolidin, 1,5-Pentandiamin, Piperazin, Ethylendiamin, N,N-Bis-(3-aminopropyl)-N-methylamin, 4,4'-Methylenbis(cyclohexylamin), 1,3-Phenylendiamin, 2,2-Bis(aminoethoxy)propan, 1,3-Cyclohexanebis(methylamin), 1,9-Diaminononan, 4,9-Dioxa-1,12-dodecanediamin, 2,2'-(Ethylenedioxy)bis(ethylamin), 4,7,10-Trioxa-1,13-tridecanediamin, Tris(2-aminoethyl)amin und *p*-Xylylenediamin. Alternativ können beispielsweise Polyamine, wie N,N-Dipropylentriamin, N²-Methyl-dipropylentriamin, N,N-Diethylentriamin, Tripropylentetramin, Triethylentetramin, Dicyandiamid, 2,4,6-Triamino-1,3,5-triamin, und Hexamethylentetramin eingesetzt werden.

Weiterhin können spezielle heterocyclische Di- und/oder Polyamine für sich oder im Gemisch oder als Lösung in einem oder mehreren der oben genannten Amine eingesetzt werden, zum Beispiel 2,4-Diamino-6-phenyl-1,3,5-triazin, 2,4-Diamino-6-capryl-1,3,5-triazin und 2,4-Diamino-6-undecyl-1,3,5-triazin. Diese Verbindungen können ebenso wie die oben genannten in Kombination mit Dycyandiamid eingesetzt werden.

Bevorzugt liegt ein molares Verhältnis des ersten Amins zum zweiten Amin im Bereich von 1,5 : 1 bis 1 : 5.

Weiterhin ist bevorzugt, wenn das Di- oder Triisocyanat eine Verbindung oder ein Gemisch von Verbindungen ist, welche ausgewählt sind aus der Gruppe umfassend Isophorondiisocyanat (IPDI), 1,4-Cyclohexandiisocyanat, 1,3-Bis(isocyanatomethyl)cyclohexan, 1,5-Diisocyanato-2-methylpentan, 1,8-Diisocyanatooctan, 4,4'-Methylen-bis(cyclohexylisocyanat), 2,2,4-Trimethyl-1,6-diisocyanatohexan, 2,4,4-Trimethyl-1,6-diisocyanatohexan, 1,12-Diisocyanatododecane, 2-Ethylbutan-1,4-diisocyanat, Hexamethylendiisocyanat (HDI), Octadecyldiisocyanat, Tricyclodecandiisocyanat, Biuret des Hexamethylendiicyanats, Trimere des Hexamethylendiisocyanats und Trimere des Isophorondiisocyanats.

Wenn vorliegend auf ,Di- oder Triisocyanat' Bezug genommen wird, so sind hiermit sowohl Einzelverbindungen als auch Gemische derselben gemeint. Mit anderen Worten, es können zwei oder mehr Einzelverbindungen im Schritt (ii) als Gemisch bereitgestellt und im Schritt (iii) umgesetzt werden. An Stelle der monomeren Diisocyanate können Prepolymere eingesetzt werden (siehe oben).

Schritt (i) erfolgt vorzugsweise bei Temperaturen im Bereich von 10 bis 180°C. Die Umsetzung kann vorzugsweise derart erfolgen, dass eine Lösung oder eine Dispersion der Harnstoffamin-Komponente im überschüssigen Amin vorliegt.

Die Umsetzung der Amine mit dem Isocyanat bzw. dem Prepolymeren erfolgt entweder in Masse oder in Gegenwart von Lösungsmitteln.

Bei der Umsetzung in Masse werden die Amine vorzugsweise vorgelegt und das Isocyanat bzw. Prepolymer bei einer Temperatur unter oder gleich 45°C langsam tropfenweise zugegeben, sofern die Amine noch flüssig vorliegen. Die Reaktionstemperatur sollte 120°C nicht übersteigen.

Bei der Umsetzung in Gegenwart von Lösungsmitteln wird die Menge an Lösungsmittel zwischen 1 % und 90 %, jeweils bezogen auf das Gesamtgemisch, eingestellt. Bevorzugt werden möglichst niedrige Mengen an Lösungsmittel, zum Beispiel 5 bis 25 % bezogen auf das Gesamtgemisch. Als Lösungsmittel werden bevorzugt N-Methylpyrrolidon, Dimethylformamid, Dimethylacetamid, Dimethylsulfoxid, Hexamethylphosphonamid, und Tetrahydrofuran eingesetzt.

Bei der Umsetzung der Amine mit Prepolymeren wird vorzugsweise ohne weitere Lösungsmittel gearbeitet. Das Prepolymer wird zu dem Amingemisch bei einer Temperatur zwischen 30 und 150°C zugegeben. Nach abgeschlossener Zugabe wird das Gemisch weitere 10 Minuten bis 8 Stunden, vorzugsweise 1 bis 4 Stunden, bei Temperaturen zwischen 150 und 250°C, vorzugsweise 180 bis 200°C, umgesetzt, wodurch die Urethangruppen des Prepolymeren gespalten und zu Harnstoffgruppen umgesetzt werden.

Wenn vorliegend die Bezeichnung 'Glycidether' verwendet wird, so sind hiermit sowohl Einzelverbindungen als auch Gemische derselben gemeint. Mit anderen Worten, der Glycidether kann zwei oder mehr Einzelverbindungen (aliphatische polyfunktionelle Glycidether) umfassen.

Als polyfunktionelle Glycidether werden vorzugsweise Di-, Tri-, oder Tetraglycidether eingesetzt. Insbesondere ist der polyfunktionelle Glycidether eine Verbindung oder ein Gemisch von Verbindungen, welche ausgewählt sind aus der Gruppe umfassend Ethylenglykol-diglycidether, Diethylenglykol-diglycidether, Triethylenglykol-diglycidether, Butandiol-1,4-diglycidether, Hexandiol-1,6-diglycidether, Octandiol-1,8-diglycidether, Dodecan-1,12-diglycidether, Isosorbid-diglycidether, Glycerin-triglycidether, Trimethylolpropan-triglycidether, Pentaerythrit-tetragycidether, Pentaerythrit-triglycidether, Diglycerin-tetraglycidether, Dipentaerythrit-hexaglycidether, und Dipentaerythrit-tetraglycidether.

Weiterhin können Glycidolester von Dicarbonsäuren eingesetzt werden, zum Beispiel Cyclohexan-1,2-dicarbonsäure-diglycidester oder Terephthalsäure-diglycidester.

Der Harnstoffamin-Komponente und/oder der Epoxid-Komponente können ein oder mehrere Additive zugesetzt werden.

Als Additive können insbesondere nanoskalige Metalloxide, Metallhydroxide, Metalloxidhydroxide, Halbmetalloxide, Silikate, Schichtsilikate, oberflächenmodifizierte Schichtsilikate, Graphen, oberflächenmodifizierte Graphene, Kohlenstoff-Hohlfasern und modifizierte Kohlenstoff-Hohlfasern eingesetzt werden. Besonders bevorzugt sind nanoskalige, teilweise exfolierte Schichtsilikate wie Cloisite, Montmorillonite (ca. 1 nm starke Aluminosilikatschichten mit ggf. auf der Oberfläche substiutuierten Metallkationen) oder mit Oniumionen oberflächenmodifizierte Montmorillonite als Schichten, Käfige oder Röhren. Weiterhin geeignet sind Silikate wie Albit, auch Calcit (Calciumcarbonat) oder Dolomit (Calcium-Magnesium-Carbonat).

Weitere Additive können Farbstoffe, Pigmente, feste oder flüssige Flammschutzmittel, Dispergierhilfsmittel, Verträglichkeitsvermittler, Verlaufmittel und Thixotropiermittel umfassen. Insbesondere als feste Pigmente werden Eisenoxide, Ruß, Titandioxid, Hämatit usw. eingesetzt, als Thixotropiermittel insbesondere Siliciumdioxid (pyrogene Kieselsäure) mit einer spezifischen Oberfläche von 90 bis 380 m²/g.

Sowohl in die Epoxid-Komponente als auch in die Harnstoffamin-Komponente können die festen und/oder flüssigen Additive eingearbeitet werden. Bei Verwendung fester Additive können z. B. Gemische aus einem Thixotropiermittel, wie pyrogene Kieselsäure, Pigmenten, wie Eisenoxiden, und einem nanoskaligen Schichtsilikat, wie einem mit Oniumionen oberflächenmodifizierte Montmorillonit, eingesetzt werden. Dabei können die jeweiligen Anteile in großen Bereichen variieren, zum Beispiel:
- Pyrogene Kieselsäure 1 bis 10 Gew.-% bezogen auf das Gesamtgemisch, insbesondere 1 bis 5 Gew.-%;
- Eisenschwarzpigment 0,1 bis 10 Gew.-% bezogen auf das Gesamtgemisch, insbesondere 0,5 bis 2,5 %; und
- nanoskaliges Schichtsilikat 0,001 bis 20 Gew.-% bezogen auf das Gesamtgemisch, insbesondere 0,01 bis 5 Gew.-%.

Ein weiterer Aspekt der Erfindung betrifft ein biozides Beschichtungsmaterial, das nach dem zuvor geschilderten Verfahren hergestellt ist.

Das biozide Beschichtungsmaterial wird vorzugsweise zur Herstellung einer Beschichtung für Schiffswände, Schiffsinterior, Schiffsdeck, Rampen, Propeller, Windkraftblätter, Windkraftanlagengehäuse, Fußböden (zum Beispiel in Großmärkten oder Kühlhallen) und Rohren, insbesondere zur Herstellung einer Rohrinnenbeschichtung von Brauchwasser-, Warmwasser- oder Trinkwasserleitungen, verwendet.

Zur Herstellung der Beschichtungen oder Filme kann die Epoxid-Komponente und die Harnstoffamin-Komponente bei einer Temperatur von 5 bis 45°C miteinander innig vermischt werden. Über die verwendeten Amine, Additive und das Verhältnis der Epoxidgruppen zu den Amingruppen lässt sich die Reaktionszeit der Systeme und deren Aushärtungsverhalten steuern, so dass beispielsweise Reaktionszeiten von 3 Minuten bis 90 Minuten möglich sind. Das reagierende Gemisch wird nach einer Zeit von 1 Minute bis zu 1 Stunde mittels Rakel, Ziehmesser, Pflatschvorrichtung oder durch Eingabe in ein Rohrsystem mit nachfolgender Glättung durch einen Molch zu den erfindungsgemäßen Beschichtungen verarbeitet. Bei bestimmten Oberflächen ist vor der erfindungsgemäßen Beschichtung das Aufbringen eines Primers möglich.

Die Mischung der beiden Komponenten kann manuell oder maschinell mit 2-Komponenten-Mischmaschinen erfolgen. So können die mittels 2-Komponenten-Mischmaschinen vermischten Komponenten in Rohre eingegeben werden, durch die Rohre mittels Druckluft eine Kugel gepresst wird, sodass an der Innenwandung Rohrinnenbeschichtungen von 20 bis 500 µm erzeugt werden.

Weitere bevorzugte Ausgestaltungen der Erfindung ergeben sich aus den nachfolgenden Ausführungsbeispielen.

### Detaillierte Beschreibung der Erfindung

### Beispiel 1

### (a) Herstellung der Harnstoffamin-Komponente

In einem beheizbaren 750 ml-Glasreaktor mit Magnetrührer, Kühler, Thermoelement und Tropftrichter werden 173 g Isophorondiamin und 63 g N-Ethyl-N-cyclohexylamin gegeben und das Rührwerk bei 20°C gestartet. Unter schnellem Rühren (4000 min⁻¹) werden tropfenweise 37 g Hexamethylendiisocyanat innerhalb von 90 Minuten zugegeben, wodurch die Temperatur des Gemisches auf 85°C steigt. Es wird eine klare Lösung des Harnstoffamins im Amingemisch erhalten, die Aminzahl beträgt 245 mg KOH/g, die Viskosität 860 mPas (25°C).

Unter Aminzahl versteht man die Menge KOH in mg, die dem Aminanteil von 1 g Substanz gleichgesetzt ist. Nach der DIN 53176 wird die Aminzahl durch potentiometrische Titration bestimmt. Die Viskosität von Flüssigkeiten wird mit einem Viskosimeter z. B. gemäß EN ISO 3219 gemessen.

### (b) Herstellung einer erfindungsgemäßen Beschichtung

Die Epoxid-Komponente wird hergestellt aus 52,5 g Trimethylolpropan-triglycidether, 5,5 g Butan-1,4-diol-diglycidether, 3,5 g pyrogene Kieselsäure (Handelsname Aerosil 380 der Firma Evonik AG), 0,5 g Eisenoxidschwarz (Teilchengröße 12 - 56 µm) und 0,5 g eines modifizierten Montmorillonits (Handelsname Nanocor I.30E).

12,5 g der Epoxid-Komponente wird bei 30°C mit 7,55 g des Harnstoffamins intensiv gemischt und auf einem Labor-Streichtisch mit integriertem Trockner (LabCoater der Firma Mathis) zu einem 200 µm Film mittels Messerrakel verstrichen. Die Topfzeit beträgt 12 Minuten. Der Film wird bei 55°C 30 Minuten gehärtet.

Man erhält einen schwarzen Film mit der Glasübergangstemperatur (DSC) 79°C.

Bewuchstests wurden mit 20 x 20 cm Filmen auf den Versuchsstationen in Wilhelmshaven (Jade) und Berlin-Wendenschloss (Dahme) unter den dort gegebenen Umweltbedingungen durchgeführt. Die Filme wurden regelmäßig auf Bewuchs überprüft. Die Ergebnisse:
Wilhelmshaven: kein Bewuchs oder Aufwuchs nach 90 Tagen feststellbar
Wendenschloss: kein Bewuchs oder Aufwuchs nach 110 Tagen feststellbar

### Beispiel 2

### (a) Herstellung der Harnstoffamin-Komponente

In einem beheizbaren 750 ml-Glasreaktor mit Magnetrührer, Kühler, Thermoelement und Tropftrichter werden 158 g eines Gemisches von 2,2,4- und 2,4,4-Trimethylhexan-1,6-diamin und 63 g N-Ethyl-N-cyclohexylamin gegeben und das Rührwerk bei 20°C gestartet. Unter schnellem Rühren (4000 min⁻¹) werden tropfenweise 42 g Hexamethylendiisocyanat innerhalb von 90 Minuten zugegeben, wodurch die Temperatur des Gemisches auf 79°C steigt. Es wird eine klare Lösung des Harnstoffamins im Amingemisch erhalten, die Aminzahl beträgt 267 mg KOH/g, die Viskosität 1240 mPas (25°C).

### (b) Herstellung einer erfindungsgemäßen Beschichtung

Die Epoxid-Komponente wird hergestellt aus 52,5 g Trimethylolpropan-triglycidether, 5,5 g Hexan-1,6-diol-diglycidether, 3,5 g pyrogene Kieselsäure (Handelsname Aerosil R208 der Firma Evonik AG), 0,5 g Eisenoxidschwarz (Teilchengröße 12 - 56 µm) und 0,8 g eines modifizierten Montmorillonits (Handelsname Nanocor I.30E).

12,5 g der Epoxid-Komponente wird bei 30°C mit 7,75 g des Harnstoffamins intensiv gemischt und auf einem Labor-Streichtisch mit integriertem Trockner (LabCoater der Firma Mathis) zu einem 200 µm Film mittels Messerrakel verstrichen. Die Topfzeit beträgt 6 Minuten. Der Film wird bei 55°C 30 Minuten gehärtet.

Man erhält einen schwarzen Film mit der Glasübergangstemperatur (DSC) 42°C.

Bewuchstests wurden mit 20 x 20 cm Filmen auf den Versuchsstationen in Wilhelmshaven (Jade) und Berlin-Wendenschloss (Dahme) unter den dort gegebenen Umweltbedingungen durchgeführt. Die Filme wurden regelmäßig auf Bewuchs überprüft. Die Ergebnisse:
Wilhelmshaven: kein Bewuchs oder Aufwuchs nach 90 Tagen feststellbar
Wendenschloss: kein Bewuchs oder Aufwuchs nach 100 Tagen feststellbar

### Beispiel 3

### (a) Herstellung der Harnstoffamin-Komponente

In einem beheizbaren 750 ml-Glasreaktor mit Magnetrührer, Kühler, Thermoelement und Tropftrichter werden 173 g Isophorondiamin und 63 g N-Ethyl-N-cyclohexylamin gegeben und das Rührwerk bei 20°C gestartet. Unter schnellem Rühren (4000 min⁻¹) werden tropfenweise 22 g Hexamethylendiisocyanat innerhalb von 90 Minuten zugegeben, wodurch die Temperatur des Gemisches auf 85°C steigt. Es wird eine klare Lösung des Harnstoffamins im Amingemisch erhalten, die Aminzahl beträgt 168 mg KOH/g, die Viskosität 647 mPas (25°C).

### (b) Herstellung einer erfindungsgemäßen Beschichtung

Die Epoxid-Komponente wird hergestellt aus 49,7 g Pentaerythrit-tetraglycidether und - triglycidether (Gemisch ca. 1:1), 7,5 g Butan-1,4-diol-diglycidether, 3,5 g pyrogene Kieselsäure (Handelsname Aerosil 380 der Firma Evonik AG), 0,5 g Eisenoxidschwarz (Teilchengröße 12 - 56 µm) und 0,25 g eines modifizierten Montmorillonits (Handelsname Nanocor I.30E).

12,5 g der Epoxid-Komponente wird bei 30°C mit 6,35 g des Harnstoffamins intensiv gemischt und auf einem Labor-Streichtisch mit integriertem Trockner (LabCoater der Firma Mathis) zu einem 200 µm Film mittels Messerrakel verstrichen. Die Topfzeit beträgt 9 Minuten. Der Film wird bei 55°C 30 Minuten gehärtet.

Man erhält einen schwarzen Film mit der Glasübergangstemperatur (DSC) 99°C.

Bewuchstests wurden mit 20 x 20 cm Filmen auf den Versuchsstationen in Wilhelmshaven (Jade) und Berlin-Wendenschloss (Dahme) unter den dort gegebenen Umweltbedingungen durchgeführt. Die Filme wurden regelmäßig auf Bewuchs überprüft. Die Ergebnisse:
Wilhelmshaven: kein Bewuchs oder Aufwuchs nach 60 Tagen feststellbar
Wendenschloss: kein Bewuchs oder Aufwuchs nach 90 Tagen feststellbar

### Beispiel 4

### (a) Herstellung der Harnstoffamin-Komponente

In einem beheizbaren 750 ml-Glasreaktor mit Magnetrührer, Kühler, Thermoelement und Tropftrichter werden 173 g Isophorondiamin und 63 g N-Ethyl-N-cyclohexylamin gegeben und das Rührwerk bei 20°C gestartet. Unter schnellem Rühren (4000 min⁻¹) wird tropfenweise ein Gemisch aus 37 g Hexamethylendiisocyanat und 110g Dimethylsulfoxid innerhalb von 60 Minuten zugegeben, wodurch die Temperatur des Gemisches auf 76°C steigt. Es wird eine klare Lösung des Harnstoffamins im Amingemisch erhalten, die Aminzahl beträgt 278 mg KOH/g, die Viskosität 743 mPas (25°C).

### (c) Herstellung einer erfindungsgemäßen Beschichtung

Die Epoxid-Komponente wird hergestellt aus 52,5 g Trimethylolpropan-triglycidether, 5,5 g Butan-1,4-diol-diglycidether, 3,5 g pyrogene Kieselsäure (Handelsname Aerosil 380 der Firma Evonik AG), 0,5 g Eisenoxidschwarz (Teilchengröße 12 - 56 µm) und 0,5 g eines modifizierten Montmorillonits (Handelsname Nanocor I.30E).

12,5 g der Epoxid-Komponente wird bei 30°C mit 7,75 g des Harnstoffamins intensiv gemischt und auf einem Labor-Streichtisch mit integriertem Trockner (LabCoater der Firma Mathis) zu einem 200 µm Film mittels Messerrakel verstrichen. Die Topfzeit beträgt 16 Minuten. Der Film wird bei 55°C 30 Minuten gehärtet.

Man erhält einen schwarzen Film mit der Glasübergangstemperatur (DSC) 86°C.

Bewuchstests wurden mit 20 x 20 cm Filmen auf den Versuchsstationen in Wilhelmshaven (Jade) und Berlin-Wendenschloss (Dahme) unter den dort gegebenen Umweltbedingungen durchgeführt. Die Filme wurden regelmäßig auf Bewuchs überprüft. Die Ergebnisse:
Wilhelmshaven: kein Bewuchs oder Aufwuchs nach 60 Tagen feststellbar
Wendenschloss: kein Bewuchs oder Aufwuchs nach 90 Tagen feststellbar

### Beispiel 5

### (a) Herstellung der Harnstoffamin-Komponente

In einem beheizbaren 750 ml-Glasreaktor mit Magnetrührer, Kühler, Thermoelement und Tropftrichter werden 158 g Trimethylhexan-1,6-diamin (Gemisch der 2,2,4- und 2,4,4-Isomeren) und 35 g N-Ethyl-N-cyclohexylamin gegeben und das Rührwerk bei 20°C gestartet. Unter schnellem Rühren (4000 min⁻¹) wird tropfenweise ein Gemisch aus 33 g Hexamethylendiisocyanat und 20 g Dimethylacetamid innerhalb von 100 Minuten zugegeben, wodurch die Temperatur des Gemisches auf 71°C steigt. Es wird eine Lösung des Harnstoffamins im Amingemisch erhalten, die Aminzahl beträgt 222 mg KOH/g, die Viskosität 682 mPas (25°C).

### (b) Herstellung einer erfindungsgemäßen Beschichtung

Die Epoxid-Komponente wird hergestellt aus 52,5 g Trimethylolpropan-triglycidether, 5,5 g Butan-1,4-diol-diglycidether, 3,5 g pyrogene Kieselsäure (Handelsname Aerosil 380 der Firma Evonik AG), 0,5 g Eisenoxidschwarz (Teilchengröße 12 - 56 µm) und 0,5 g eines modifizierten Montmorillonits (Handelsname Nanocor I.30E).

12,5 g der Epoxid-Komponente wird bei 30°C mit 7,75 g des Harnstoffamins intensiv gemischt und auf einem Labor-Streichtisch mit integriertem Trockner (LabCoater der Firma Mathis) zu einem 200 µm Film mittels Messerrakel verstrichen. Die Topfzeit beträgt 16 Minuten. Der Film wird bei 55°C 30 Minuten gehärtet.

Man erhält einen schwarzen Film mit der Glasübergangstemperatur (DSC) 45°C.

Bewuchstests wurden mit 20 x 20 cm Filmen auf den Versuchsstationen in Wilhelmshaven (Jade) und Berlin-Wendenschloss (Dahme) unter den dort gegebenen Umweltbedingungen durchgeführt. Die Filme wurden regelmäßig auf Bewuchs überprüft. Die Ergebnisse:
Wilhelmshaven: kein Bewuchs oder Aufwuchs nach 60 Tagen feststellbar
Wendenschloss: kein Bewuchs oder Aufwuchs nach 75 Tagen feststellbar

### Beispiel 6

### (a) Herstellung der Harnstoffamin-Komponente

In einem beheizbaren 750 ml-Glasreaktor mit Magnetrührer, Kühler, Thermoelement und Tropftrichter werden 173 g Isophorondiamin und 63 g N-Ethyl-N-cyclohexylamin gegeben und das Rührwerk bei 20°C gestartet. Unter schnellem Rühren (4000 min⁻¹) wird tropfenweise ein Gemisch aus 37 g Hexamethylendiisocyanat und 37 g Dimethylsulfoxid innerhalb von 60 Minuten zugegeben, wodurch die Temperatur des Gemisches auf 81°C steigt. Nach beendeter Zugabe wird die Temperatur langsam auf 115°C erhöht und 15 Minuten bei dieser Temperatur gerührt. Es wird eine klare Lösung des Harnstoffamins im Amingemisch erhalten, die Aminzahl beträgt 243 mg KOH/g, die Viskosität 1127 mPas (25°C).

### (b) Herstellung einer erfindungsgemäßen Beschichtung

Die Epoxid-Komponente wird hergestellt aus 52,5 g Trimethylolpropan-triglycidether, 5,5 g Butan-1,4-diol-diglycidether, 3,5 g pyrogene Kieselsäure (Handelsname Aerosil 380 der Firma Evonik AG), 0,5 g Eisenoxidschwarz (Teilchengröße 12 - 56 µm) und 0,5 g eines modifizierten Montmorillonits (Handelsname Nanocor I.30E).

12,5 g der Epoxid-Komponente wird bei 30°C mit 7,4 g des Harnstoffamins intensiv gemischt und auf einem Labor-Streichtisch mit integriertem Trockner (LabCoater der Firma Mathis) zu einem 200 µm Film mittels Messerrakel verstrichen. Die Topfzeit beträgt 10 Minuten. Der Film wird bei 55°C 30 Minuten gehärtet.

Man erhält einen schwarzen Film mit der Glasübergangstemperatur (DSC) 77°C.

Bewuchstests wurden mit 20 x 20 cm Filmen auf den Versuchsstationen in Wilhelmshaven (Jade) und Berlin-Wendenschloss (Dahme) unter den dort gegebenen Umweltbedingungen durchgeführt. Die Filme wurden regelmäßig auf Bewuchs überprüft. Die Ergebnisse:
Wilhelmshaven: kein Bewuchs oder Aufwuchs nach 45 Tagen feststellbar
Wendenschloss: kein Bewuchs oder Aufwuchs nach 45 Tagen feststellbar

### Beispiel 7

### (a) Herstellung der Harnstoffamin-Komponente

In einem beheizbaren 2 I-Glasreaktor mit Magnetrührer, Kühler, Thermoelement und Tropftrichter werden 735 g Isophorondiamin, 466 g 4,4'-Methylenbis(cyclohexylamin) und 342 g N-Ethyl-piperazin gegeben und das Rührwerk bei 20°C gestartet. Unter schnellem Rühren (4000 min⁻¹) wird tropfenweise ein Gemisch aus 121 g Hexamethylendiisocyanat und 83 g Isophorondiisocyanat innerhalb von 240 Minuten zugegeben, wodurch die Temperatur des Gemisches auf 96°C steigt. Nach beendeter Zugabe wird die Temperatur langsam auf 130°C erhöht und 45 Minuten bei dieser Temperatur gerührt. Es wird eine klare Lösung des Harnstoffamins im Amingemisch erhalten, die Aminzahl beträgt 188 mg KOH/g, die Viskosität 1455 mPas (25°C).

### (b) Herstellung einer erfindungsgemäßen Beschichtung

Die Epoxid-Komponente wird hergestellt aus 500g Pentaerythrit-tetraglycidether, 125 g Dipentaerythrit-pentaglycidether, 12,5 g mikronisiertes Titandioxid, 12,5 g Eisenoxidschwarz (Teilchengröße 12 - 56 µm) und 1,5 g eines modifizierten Montmorillonits (Handelsname Nanocor I.30E).

Die Epoxid-Komponente wird bei 30°C mittels einer Mischmaschine von Hilger & Kern im Verhältnis 1,33 : 1 mittels statischem Mischer gemischt und auf den Estrich eines Beton-Fußbodens mittels Rakel ausgestrichen, so dass eine Beschichtung von durchschnittlich 400 µm gebildet wurde. Die Topfzeit betrug 20 Minuten, die Klebfreizeit 56 Minuten, die Aushärtungszeit 12 Stunden. Man erhält einen schwarzen Film mit der Glasübergangstemperatur (DSC) 176°C, einer Abreißfestigkeit von 22 N/mm², einer Shore-D-Härte von 62 und einer Bruchdehnung von 5,8 %.

Auf einer Beton-Testplatte von 40 x 40 cm wurde ebenfalls diese Beschichtung aufgebracht und mit einer Wasserprobe aus einem nahen Gewässer überschichtet. Nach 30 Tagen wurde das überstehende Wasser entfernt und die Schicht geprüft. Nach Spülen mit 0,5 at Wasser war die Schicht vollständig sauber.

### Beispiel 8

### (a) Herstellung der Harnstoffamin-Komponente

In einem beheizbaren 2 I-Glasreaktor mit Magnetrührer, Kühler, Thermoelement und Tropftrichter werden 466 g 4,4'-Methylenbis(cyclohexylamin), 355 g 2,2-Bis(aminoethoxy)propan und 165 g N-Ethyl-N-cyclohexylamin gegeben und das Rührwerk bei 20°C gestartet. Unter schnellem Rühren (4000 min⁻¹) wird tropfenweise ein Gemisch aus 121 g Hexamethylendiisocyanat und 52 g 1,3-Bis(isocyanatomethyl)cyclohexan innerhalb von 180 Minuten zugegeben, wodurch die Temperatur des Gemisches auf 106°C steigt. Nach beendeter Zugabe wird die Temperatur langsam auf 125°C erhöht und 30 Minuten bei dieser Temperatur gerührt. Es wird eine klare Lösung des Harnstoffamins im Amingemisch erhalten, die Aminzahl beträgt 205 mg KOH/g, die Viskosität 1086 mPas (25°C).

### (b) Herstellung einer erfindungsgemäßen Beschichtung

Die Epoxid-Komponente wird hergestellt aus 525 g Trimethylolpropan-triglycidether, 75 g Pentaerythrit-triglycidether, 35 g pyrogene Kieselsäure (Handelsname Aerosil R208 der Firma Evonik AG), 7 g Eisenoxidschwarz (Teilchengröße 12 - 56 µm) und 4 g eines modifizierten Montmorillonits (Handelsname Nanocor I.30E).

Die Epoxid-Komponente wird bei 30°C mittels einer Mischmaschine von Hilger & Kern im Verhältnis 1,48 : 1 mit der Harnstoffamin-Komponente mittels statischem Mischer gemischt und in ein HDPE-Rohr von 14 mm Innendurchmesser gegeben. Danach wird mittels Druckluft ein 13 mm Molch durch das Rohr geführt, so dass eine Beschichtung von durchschnittlich 300 µm an der Rohrinnenwandung gebildet wurde. Die Topfzeit betrug 20 Minuten, die Klebfreizeit 56 Minuten, die Aushärtungszeit 12 Stunden. Man erhält einen schwarzen Film mit der Glasübergangstemperatur (DSC) 81°C, einer Shore-A-Härte von 85, einer Bruchdehnung von 8,4 % und einer Abreißfestigkeit von 18 N/mm².

Ein Muster des innen beschichteten Rohrs von 30 cm Länge wurde mit einer Trinkwasserprobe versetzt, die zusätzlich 1000 Keime je ml Listerien enthielt. Nach 7 Tagen bei 25°C wurde das Wasser wieder auf seine Keimzahl überprüft. Es wurde ein Wert von 678 Keime je ml ermittelt.

### Beispiel 9

### (a) Herstellung der Harnstoffamin-Komponente

### (a1) Herstellung eines Isocyanat-Prepolymeren

111,1 g Isophorondiisocyanat und 92,5 g Polytetrahydrofuran der Molmasse 250 werden in einen 350 ml Glasreaktor gegeben und das Gemisch bei 45°C gerührt. Nach beendeter Zugabe wird das Gemisch noch1 h bei 60 °C gerührt. Es wird ein farbloses, klares niedrig viskoses Prepolymer mit 14,3 % Isocyanat erhalten.

### (a2) Herstellung der Harnstoffamin-Komponente

In einem beheizbaren 200 ml-Glasreaktor werden 34,06 g Isophorondiamin, 6,36 g N-Ethyl-N-cyclohexylamin, 8,67 g Hexatran 100 vorgelegt und 4,46 g des Prepolymeren langsam unter Stickstoff-Schutzgas bei 50°C zugeben, nach der Zugabe wird auf 160 °C erwärmt und 1 h bei dieser Temperatur gerührt. Danach wird abgekühlt. Das Harnstoffamin hat folgende Eigenschaften:
Aminzahl: 603,4 mg KOH/g
η _{25°C} = 41 mPas

### (b) Herstellung einer erfindungsgemäßen Beschichtung

12,5 g der Epoxid-Komponente aus einem Gemisch aus Glycerindiglycidether und Glycerintriglycidether mit dem Epoxyd-Äquivalent 143 g/Mol wird bei 30°C mit 8,13 g des Harnstoffamins intensiv gemischt und auf einem Labor-Streichtisch mit integriertem Trockner (LabCoater der Firma Mathis) zu einem 200 µm Film mittels Messerrakel verstrichen. Die Topfzeit beträgt 23 Minuten. Der Film wird bei 55°C 30 Minuten gehärtet.

Man erhält einen glasklaren Film mit der Glasübergangstemperatur (DSC) 59°C.

Bewuchstests wurden mit 20 x 20 cm Filmen auf einer Versuchsstation unter den dort gegebenen Umweltbedingungen durchgeführt. Die Filme wurden regelmäßig auf Bewuchs überprüft. Nach 45 Tagen wurde kein Bewuchs festgestellt. Eine Kontrollprobe, die durch Härtung allein mit Isophorondiamin hergestellt worden war, wies nach 21 Tagen einen deutlichen (grünen) Algenbewuchs auf.

### Beispiel 10

### (a) Herstellung der Harnstoffamin-Komponente

### (a1) Herstellung eines Isocyanat-Prepolymeren

111,1 g Isophorondiisocyanat und 92,5 g Polytetrahydrofuran der Molmasse 250 werden in einen 350 ml Glasreaktor gegeben und das Gemisch bei 45°C gerührt. Nach beendeter Zugabe wird das Gemisch noch1 h bei 60 °C gerührt. Es wird ein farbloses, klares niedrig viskoses Prepolymer mit 14,3 % Isocyanat erhalten.

### (a2) Herstellung der Harnstoffamin-Komponente

In einem beheizbaren 750 ml-Glasreaktor werden 341 g Isophorondiamin, 25 g N-Ethyl-N-cyclohexylamin und 145 g N,N-Bis(3-aminopropyl)-N-methylamin vorgelegt und 56 g des Prepolymeren langsam unter Stickstoff-Schutzgas bei 50°C zugeben, wodurch die Temperatur auf 75°C ansteigt; nach der Zugabe wird auf 100 °C erwärmt und 1 h bei dieser Temperatur gerührt. Danach wird drei Stunden auf 185°C unter Rühren erwärmt und abgekühlt. Das Harnstoffamin hat folgende Eigenschaften:
Aminzahl: 686 mg KOH/g
η _{25°C} = 67 mPas

### (b) Herstellung einer erfindungsgemäßen Beschichtung

14,5 g der Epoxid-Komponente aus einem Gemisch aus Glycerindiglycidether und Glycerintriglycidether mit dem Epoxyd-Äquivalent 143 g/Mol wird bei 30°C mit 8,2 g des Harnstoffamins intensiv gemischt und auf einem Labor-Streichtisch mit integriertem Trockner (LabCoater der Firma Mathis) zu einem 200 µm Film mittels Messerrakel verstrichen. Die Topfzeit beträgt 7 Minuten. Der Film wird bei 55°C 30 Minuten gehärtet.

Man erhält einen glasklaren Film mit der Glasübergangstemperatur (DSC) 45°C.

Bewuchstests wurden mit 20 x 20 cm Filmen auf einer Versuchsstation unter den dort gegebenen Umweltbedingungen im November 2017 durchgeführt. Die Filme wurden regelmäßig auf Bewuchs überprüft. Nach 35 Tagen wurde kein Bewuchs festgestellt. Eine Kontrollprobe, die durch Härtung allein mit Isophorondiamin hergestellt worden war, wies nach 21 Tagen einen deutlichen (grünen) Algenbewuchs auf.

### Beispiel 11

### (a) Herstellung der Harnstoffamin-Komponente

### (a1) Herstellung eines Isocyanat-Prepolymeren

111,1 g Isophorondiisocyanat und 90 g Polytetrahydrofuran der Molmasse 250 werden in einen 350 ml Glasreaktor gegeben und das Gemisch bei 45°C gerührt. Nach beendeter Zugabe wird das Gemisch noch1 h bei 60 °C gerührt. Es wird ein farbloses, klares niedrig viskoses Prepolymer mit 14,45 % Isocyanat erhalten.

### (a2) Herstellung der Harnstoffamin-Komponente

In einem beheizbaren 750 ml-Glasreaktor werden 15 g N-Ethyl-N-cyclohexylamin, 272,5 g Isophorondiamin und 63,5 g N,N-Bis(3-aminopropyl)-N-methylamin vorgelegt und 98 g des Prepolymeren langsam unter Stickstoff-Schutzgas bei 50°C zugeben, wodurch die Temperatur auf 65°C ansteigt; nach der Zugabe wird auf 100 °C erwärmt und 1 h bei dieser Temperatur gerührt. Danach wird drei Stunden auf 190°C unter Rühren erwärmt und abgekühlt. Das Harnstoffamin hat folgende Eigenschaften:
Aminzahl: 451 mg KOH/g
η _{25°C} = 521 mPas

### (b) Herstellung einer erfindungsgemäßen Beschichtung

14,5 g der Epoxid-Komponente aus einem Gemisch aus Glycerindiglycidether und Glycerintriglycidether mit dem Epoxyd-Äquivalent 143 g/Mol wird bei 30°C mit 6,3 g des Harnstoffamins intensiv gemischt und auf einem Labor-Streichtisch mit integriertem Trockner (LabCoater der Firma Mathis) zu einem 200 µm Film mittels Messerrakel verstrichen. Die Topfzeit beträgt 23 Minuten. Der Film wird bei 60°C 60 Minuten gehärtet.

Man erhält einen glasklaren Film mit der Glasübergangstemperatur (DSC) 69°C.

Bewuchstests wurden mit 20 x 20 cm Filmen auf einer Versuchsstation unter den dort gegebenen Umweltbedingungen im November 2017 durchgeführt. Die Filme wurden regelmäßig auf Bewuchs überprüft. Nach 35 Tagen wurde kein Bewuchs festgestellt. Eine Kontrollprobe, die durch Härtung allein mit Isophorondiamin hergestellt worden war, wies nach 21 Tagen einen deutlichen (grünen) Algenbewuchs auf.

### Beispiel 12

### (a) Herstellung der Harnstoffamin-Komponente

### (a1) Herstellung eines Isocyanat-Prepolymeren

111,1 g Isophorondiisocyanat und 90 g Polytetrahydrofuran der Molmasse 250 werden in einen 350 ml Glasreaktor gegeben und das Gemisch bei 45°C gerührt. Nach beendeter Zugabe wird das Gemisch noch1 h bei 60 °C gerührt. Es wird ein farbloses, klares niedrig viskoses Prepolymer mit 14,45 % Isocyanat erhalten.

### (a2) Herstellung der Harnstoffamin-Komponente

In einem beheizbaren 750 ml-Glasreaktor werden 63,5 g N-Ethyl-N-cyclohexylamin, 255 g Isophorondiamin und 32,5 g Diethylentriamin vorgelegt und 96 g des Prepolymeren langsam unter Stickstoff-Schutzgas bei 45°C zugeben, wodurch die Temperatur auf 75°C ansteigt; nach der Zugabe wird auf 120 °C erwärmt und 1 h bei dieser Temperatur gerührt. Danach wird drei Stunden auf 190°C unter Rühren erwärmt und abgekühlt. Das Harnstoffamin hat folgende Eigenschaften:
Aminzahl: 467 mg KOH/g
η _{25°C} = 143 mPas

### (b) Herstellung einer erfindungsgemäßen Beschichtung

14,5 g der Epoxid-Komponente aus einem Gemisch aus Glycerindiglycidether und Glycerintriglycidether mit dem Epoxyd-Äquivalent 143 g/Mol wird bei 30°C mit 6,0 g des Harnstoffamins intensiv gemischt und auf einem Labor-Streichtisch mit integriertem Trockner (LabCoater der Firma Mathis) zu einem 200 µm Film mittels Messerrakel verstrichen. Die Topfzeit beträgt 26 Minuten. Der Film wird bei 60°C 60 Minuten gehärtet.

Man erhält einen glasklaren Film mit der Glasübergangstemperatur (DSC) 71 °C.

Bewuchstests wurden mit 20 x 20 cm Filmen auf einer Versuchsstation unter den dort gegebenen Umweltbedingungen im November 2017 durchgeführt. Die Filme wurden regelmäßig auf Bewuchs überprüft. Nach 35 Tagen wurde kein Bewuchs festgestellt. Eine Kontrollprobe, die durch Härtung allein mit Isophorondiamin hergestellt worden war, wies nach 21 Tagen einen deutlichen (grünen) Algenbewuchs auf.

### Beispiel 13

### (c) Herstellung der Harnstoffamin-Komponente

### (a1) Herstellung eines Isocyanat-Prepolymeren

111,1 g Isophorondiisocyanat und 90 g Polytetrahydrofuran der Molmasse 250 werden in einen 350 ml Glasreaktor gegeben und das Gemisch bei 45°C gerührt. Nach beendeter Zugabe wird das Gemisch noch1 h bei 60 °C gerührt. Es wird ein farbloses, klares niedrig viskoses Prepolymer mit 14,45 % Isocyanat erhalten.

### (a2) Herstellung der Harnstoffamin-Komponente

In einem beheizbaren 750 ml-Glasreaktor werden 45 g N-Ethyl-N-cyclohexylamin, 258,5 g Isophorondiamin und 25 g Dicyandiamid vorgelegt und 98 g des Prepolymeren langsam unter Stickstoff-Schutzgas bei 60°C zugeben, wodurch die Temperatur auf 75°C ansteigt; nach der Zugabe wird auf 130 °C erwärmt und 1 h bei dieser Temperatur gerührt. Danach wird drei Stunden auf 210°C unter Rühren erwärmt und abgekühlt. Das Harnstoffamin hat folgende Eigenschaften:
Aminzahl: 389,5 mg KOH/g
η _{25°C} = 4900 mPas

### (d) Herstellung einer erfindungsgemäßen Beschichtung

14,5 g der Epoxid-Komponente aus einem Gemisch aus Glycerindiglycidether und Glycerintriglycidether mit dem Epoxyd-Äquivalent 143 g/Mol wird bei 30°C mit 7,35 g des Harnstoffamins intensiv gemischt und auf einem Labor-Streichtisch mit integriertem Trockner (LabCoater der Firma Mathis) zu einem 200 µm Film mittels Messerrakel verstrichen. Die Topfzeit beträgt 44 Minuten. Der Film wird bei 60°C 60 Minuten gehärtet.

Man erhält einen glasklaren Film mit der Glasübergangstemperatur (DSC) 76°C.

Bewuchstests wurden mit 20 x 20 cm Filmen auf einer Versuchsstation unter den dort gegebenen Umweltbedingungen im November 2017 durchgeführt. Die Filme wurden regelmäßig auf Bewuchs überprüft. Nach 35 Tagen wurde kein Bewuchs festgestellt. Eine Kontrollprobe, die durch Härtung allein mit Isophorondiamin hergestellt worden war, wies nach 21 Tagen einen deutlichen (grünen) Algenbewuchs auf.

### Beispiel 14

### (a) Herstellung der Harnstoffamin-Komponente

In einem beheizbaren 2 I-Glasreaktor mit Magnetrührer, Kühler, Thermoelement und Tropftrichter werden 1020 g IPDA, 191 g N-Ethyl-N-cyclohexylamin (NECHA), 260 g Trisaminomethyl-hexan gegeben und unter schnellem Rühren auf 60°C erwärmt. In dieses Gemisch werden 134 g eines Prepolymeren aus 533,5 g Isophorondiisocyanat und 90,5 g Butan-1,4-diol unter schnellem Rühren derart gegeben, so dass die Temperatur 75°C nicht übersteigt. Anschließend wird die Temperatur langsam auf 175°C erhöht und unter Rühren eine Stunde bei dieser Temperatur halten. Das Reaktionsprodukt weist eine Aminzahl von 603,4 mg KOH/g und eine Viskosität von η _{25°C} = 2160 mPas auf.

### (b) Herstellung einer erfindungsgemäßen Beschichtung

Die Epoxid-Komponente wird hergestellt aus 525 g Trimethylolpropan-triglycidether, 75 g Pentaerythrit-triglycidether, 35 g pyrogene Kieselsäure (Handelsname Aerosil R208 der Firma Evonik AG), 7 g Eisenoxidschwarz (Teilchengröße 12 - 56 µm) und 4 g eines modifizierten Montmorillonits (Handelsname Nanocor I.30E).

Die Epoxid-Komponente wird bei 30°C mittels einer Mischmaschine von Hilger & Kern im Verhältnis 1,75 : 1 mittels statischem Mischer gemischt und in ein HDPE-Rohr von 14 mm Innendurchmesser gegeben. Danach wurde mittels Druckluft ein 13 mm Molch durch das Rohr geführt, so dass eine Beschichtung von durchschnittlich 300 µm an der Rohrinnenwandung gebildet wurde. Die Topfzeit betrug 40 Minuten, die Klebfreizeit 250 Minuten, die Aushärtungszeit 18 Stunden. Man erhält einen schwarzen Film mit der Glasübergangstemperatur (DSC) 72°C, einer Shore-A-Härte von 82, einer Bruchdehnung von 16,5 % und einer Abreißfestigkeit von 33 N/mm².

Ein Muster des innen beschichteten Rohrs von 30 cm Länge wurde mit einer Trinkwasserprobe versetzt, die zusätzlich 1000 Keime je ml Listerien enthielt. Nach 7 Tagen bei 25°C wurde das Wasser wieder auf seine Keimzahl überprüft. Es wurde ein Wert von 82 Keime je ml ermittelt.

### Beispiel 15

### (b) Herstellung der Harnstoffamin-Komponente

In einem beheizbaren 2 I-Glasreaktor mit Magnetrührer, Kühler, Thermoelement und Tropftrichter werden 1010 g IPDA, 75 g N-Ethyl-N-cyclohexylamin (NECHA), 435 g N²-Methyl-dipropylentriamin gegeben und unter schnellem Rühren auf 50°C erwärmt. In dieses Gemisch werden 167 g eines Prepolymeren aus 533,5 g Isophorondiisocyanat und 92,0 g Butan-1,4-diol unter schnellem Rühren derart gegeben, so dass die Temperatur 75°C nicht übersteigt. Anschließend wird die Temperatur langsam auf 175°C erhöht und unter Rühren eine Stunde bei dieser Temperatur halten. Das Reaktionsprodukt weist eine Aminzahl von 608,7 mg KOH/g und eine Viskosität von η _{25°C} = 2740 mPas auf.

### (b) Herstellung einer erfindungsgemäßen Beschichtung

Die Epoxid-Komponente wird hergestellt aus 525 g Trimethylolpropan-triglycidether, 75 g Pentaerythrit-triglycidether, 35 g pyrogene Kieselsäure (Handelsname Aerosil R208 der Firma Evonik AG), 7 g Eisenoxidschwarz (Teilchengröße 12 - 56 µm) und 4 g eines modifizierten Montmorillonits (Handelsname Nanocor I.30E).

Die Epoxid-Komponente wird bei 30°C mittels einer Mischmaschine von Hilger & Kern im Verhältnis 1,75 : 1 mittels statischem Mischer gemischt und in ein HDPE-Rohr von 14 mm Innendurchmesser gegeben. Danach wurde mittels Druckluft ein 13 mm Molch durch das Rohr geführt, so dass eine Beschichtung von durchschnittlich 300 µm an der Rohrinnenwandung gebildet wurde. Die Topfzeit betrug 27 Minuten, die Klebfreizeit 130 Minuten, die Aushärtungszeit 11 Stunden. Man erhält einen schwarzen Film mit der Glasübergangstemperatur (DSC) 78°C, einer Shore-A-Härte von 76, einer Bruchdehnung von 12 % und einer Abreißfestigkeit von 21 N/mm².

Ein Muster des innen beschichteten Rohrs von 30 cm Länge wurde mit einer Trinkwasserprobe versetzt, die zusätzlich 1000 Keime je ml Listerien enthielt. Nach 7 Tagen bei 25°C wurde das Wasser wieder auf seine Keimzahl überprüft. Es wurde ein Wert von 255 Keime je ml ermittelt.

## Patentansprüche

1. Verfahren zur Herstellung eines bioziden Beschichtungsmaterials, umfassend die Schritte:
(i) Bereitstellen einer Harnstoffamin-Komponente, erhältlich durch Umsetzung
a) eines aliphatischen Di- oder Triisocyanat
mit
b) einem Gemisch aus einem ersten Amin mit einer primären oder sekundären Amingruppe und einem oder mehreren zweiten Amin(en) mit 2 oder mehr primären oder sekundären Amingruppen,
wobei ein Verhältnis der Summe der primären und sekundären Amingruppen zu den Isocyanatgruppen 10 : 1 bis 2 : 1 beträgt;
(ii) Bereitstellen einer Epoxid-Komponente, die einen oder mehrere aliphatische(n) polyfunktionelle(n) Glycidether umfasst; und
(iii) Umsetzen der Harnstoffamin-Komponente mit der Epoxid-Komponente, wobei ein Verhältnis der Epoxidgruppen der Epoxid-Komponente zu den Amingruppen der Harnstoffamin-Komponente 0,25 : 1 bis 1 : 0,25 beträgt.

2. Verfahren nach Anspruch 1, bei dem ein molares Verhältnis des ersten Amins zum zweiten Amin im Bereich von 1,5 : 1 bis 1 : 3 liegt.

3. Verfahren nach einem der vorhergehenden Ansprüche, bei dem das erste Amin eine sekundäre Amingruppe aufweist.

4. Verfahren nach Anspruch 3, bei dem das erste Amin eine Verbindung oder ein Gemisch von Verbindungen ist, welche ausgewählt sind aus der Gruppe umfassend Di-n-butylamin, Butylamin, Piperidin, Cyclohexylamin, N-Ethyl-N-cyclohexylamin, 2-Aminoethanol, Dimethylamin, N-Methyl-N-cyclohexylamin, N-Propyl-N-cyclohexylamin, N-Butyl-N-cyclohexylamin, N,N-Dicyclohexylamin und Aziridin.

5. Verfahren nach einem der vorhergehenden Ansprüche, bei dem das zweite Amin zwei Amingruppen aufweist.

6. Verfahren nach Anspruch 5, bei dem das zweite Amin eine Verbindung oder ein Gemisch von Verbindungen ist, welche ausgewählt sind aus der Gruppe umfassend 1-Amino-3-aminomethyl-3,5,5-trimethylcyclohexan (Isophorondiamin), 1,3-Benzendimethanamin, Bis-(4-aminocyclohexyl)methan, 1,4-Diaminobutan, 1,6-Diaminohexan, 2-Methyl-1,5-diaminopentan, 1,6-Diamino-2,2,4-trimethylhexan, 1,6-Diamino-2,4,4-trimethylhexan, Cyclohexan-1,4-diamin, 2-Ethyl-imidazolidin, 1,5-Pentandiamin, Piperazin, Ethylendiamin, 4,4'-Methylenbis(cyclohexylamin), 1,3-Phenylendiamin, 2,2-Bis(aminoethoxy)propan, 1,3-Cyclohexanebis(methylamin), 1,9-Diaminononan, 4,9-Dioxa-1,12-dodecanediamin, 2,2'-(Ethylenedioxy)bis(ethylamin), 4,7,10-Trioxa-1,13-tridecanediamin, Tris(2-aminoethyl)amin und *p*-Xylylenediamin.

7. Verfahren nach einem der vorhergehenden Ansprüche, bei dem das Di- oder Triisocyanat eine Verbindung oder ein Gemisch von Verbindungen ist, welche ausgewählt sind aus der Gruppe umfassend Isophorondiisocyanat (IPDI), 1,4-Cyclohexandiisocyanat, 1,3-Bis(isocyanatomethyl)cyclohexan, 1,5-Diisocyanato-2-methylpentan, 1,8-Diisocyanatooctan, 4,4'-Methylenebis(cyclohexylisocyanat), 2,2,4-Trimethyl-1,6-diisocyanatohexan, 2,4,4-Trimethyl-1,6-diisocyanatohexan, 1,12-Diisocyanatododecane, 2-Ethylbutan-1,4-diisocyanat, Hexamethylendiisocyanat (HDI), Octadecyldiisocyanat, Tricyclodecandiisocyanat, Biuret des Hexamethylendiicyanats, Trimere des Hexamethylendiisocyanats und Trimere des Isophorondiisocyanats.

8. Verfahren nach einem der vorhergehenden Ansprüche, bei dem der polyfunktionelle Glycidether ein Di-, Tri-, oder Tetraglycidether ist.

9. Verfahren nach einem der vorhergehenden Ansprüche, bei dem der polyfunktionelle Glycidether eine Verbindung oder ein Gemisch von Verbindungen ist, welche ausgewählt sind aus der Gruppe umfassend Ethylenglykol-diglycidether, Diethylenglykol-diglycidether, Triethylenglykol-diglycidether, Butandiol-1,4-diglycidether, Hexandiol-1,6-diglycidether, Octandiol-1,8-diglycidether, Dodecan-1,12-diglycidether, Isosorbid-diglycidether, Glycerin-triglycidether, Trimethylolpropan-triglycidether, Pentaerythrit-tetragycidether, Pentaerythrit-triglycidether, Diglycerin-tetraglycidether, Dipentaerythrit-hexaglycidether, und Dipentaerythrit-tetraglycidether.

10. Verfahren nach einem der vorhergehenden Ansprüche, bei dem der Harnstoffamin-Komponente und/oder der Epoxid-Komponente ein oder mehrere Additive zugesetzt werden.

11. Biozides Beschichtungsmaterial, hergestellt nach einem Verfahren der vorhergehenden Ansprüche.

12. Verwendung des bioziden Beschichtungsmaterials gemäß Anspruch 11 zur Herstellung einer Beschichtung für Schiffswände, Schiffsinterior, Schiffsdeck, Rampen, Propeller, Windkraftblätter, Windkraftanlagengehäuse, Fußböden und Rohren.

13. Verwendung des bioziden Beschichtungsmaterials gemäß Anspruch 12 zur Herstellung einer Rohrinnenbeschichtung.
